Europäisches Patentamt

European Patent Office

Office européen des brevets

(19)

(11) Veröffentlichungsnummer: **0 022 499**
**A1**

# (12) EUROPÄISCHE PATENTANMELDUNG

(21) Anmeldenummer: 80103640.1

(22) Anmeldetag: 27.06.80

(51) Int. Cl.³: **H 02 K 33/06,** F 04 B 45/04

(30) Priorität: 14.07.79 DE 2928567

(43) Veröffentlichungstag der Anmeldung: 21.01.81
Patentblatt 81/3

(84) Benannte Vertragsstaaten: **AT BE CH DE FR GB IT LI NL SE**

(71) Anmelder: **Tetra Werke Dr.rer.nat. Ulrich Baensch GmbH, Herrenteich 70, D-4520 Melle (DE)**

(72) Erfinder: **Riepe, Waldemar, Elsa-Brandström-Strasse 3, D-4500 Osnabrück (DE)**
Erfinder: **Nowatzki, Günter, In der Trift, D-3576 Ernsthausen (DE)**

(74) Vertreter: **Depmeyer, Lothar, Auf der Höchte 30, D-3008 Garbsen 1 (DE)**

(54) **Zwillingsmembranverdichter, insbesondere zur Belüftung und dgl. von Aquarien.**

(57) Bei diesem Verdichter sind zwei im wesentlichen einander parallele, schwingend angeordnete Hebel (8) vorgesehen, welche die dem Verdichter zugeordneten Membranen betätigen. Diese Hebel (8) sind elektromagnetisch angetrieben und zu diesem Zweck mit Permanentmagneten (13) ausgestattet.

Um störende Vibrationen und Geräusche auszuschalten, erfolgt eine gegenläufige Bewegung der Hebel (8), indem eine entsprechende Polung des elektrischen Antriebs vorgesehen ist und dabei vorzugsweise Permanentmagnete (13) verwendet werden, die von gleicher Polung sind.

Zwillingsmembranverdichter insbesondere zur Belüftung und dgl. von Aquarien

Die Erfindung betrifft einen Zwillingsmembranverdichter insbesondere zur Belüftung und dgl. von Aquarien mit Permanentmagnete aufweisenden, elektromagnetisch angetriebenen, im wesentlichen einander parallelen, schwingend angeordneten Hebeln zur Membranbetätigung.

Diese vor den Schenkeln eines meist E-förmigen Blechpaketes angeordneten Magnete sind unterschiedlich gepolt, um so gleichläufige Schwingbewegungen der erwähnten Hebel zu erreichen. Bei den so gebildeten sogenannten 5o Hz - Pumpen ergibt sich eine erhebliche, störend wirkende Vibration, die sich sowohl akustisch als auch mechanisch auswirkt.

Der Erfindung liegt im wesentlichen die Aufgabe zugrunde, diese Vibrationen erheblich zu vermindern.

Dies wird erfindungsgemäss durch eine eine gegenläufige Bewegung der erwähnten Hebel auslösende Polung des elektrischen Antriebs erreicht, und zwar insbesondere durch die Benutzung von Magneten gleicher Polung. Die so erreichte Gegenläufigkeit des Pumpenantriebes hat zur Folge, dass die erwünschten Erschütterungen stark vermindert werden, während der eigentliche Pumpenantrieb ungestört vonstatten gehen kann.

In Verfolg des Erfindungsgedankens weisen dabei bei einem wechselstromerregten Blechpaket von etwa E-förmiger Gestalt die je vor zwei Schenkeln hin- und herbewegbaren Hebelenden Permanentmagnete gleicher Polung auf, wobei vorzugsweise die Permanentmagnete bei einer gegenseitigen Näherung vor einen Schenkel grösseren Querschnitts gelangen ( im Vergleich zu den anderen Schenkeln ). Hierdurch ergibt sich eine im Aufbau einfache Pumpe mit vergleichsweise grosser Pumpleistung.

Um eine weitere Minderung der Vibrationen herbeizuführen, kann das im wesentlichen geschlossene Pumpengehäuse in einem ebenfalls im wesentlichen geschlossenen Gehäuse angeordnet sein, wobei die Gehäusewandungen der beiden Gehäuse nahe beieinander und im wesentlichen parallel zueinander angeordnet sind. Auch können dabei die der Membranbetätigung dienenden Hebel in Gummilagern schwingend angeordnet sein.

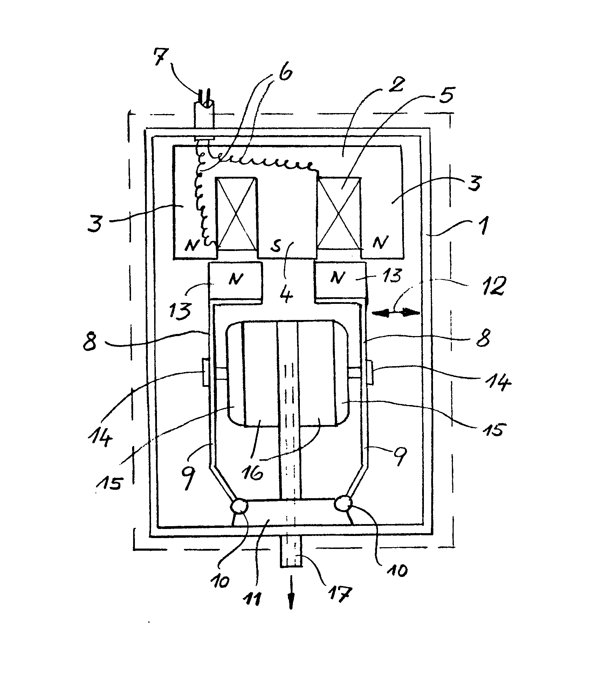

Weitere Einzelheiten der Erfindung werden anhand der Zeichnung erläutert, in der ein Ausführungsbeispiel dargestellt ist, das vorzugsweise verwendet werden soll.

Die Abbildung zeigt eine Zwillingsmembranluftpumpe zur Belüftung von Aquarien in der Draufsicht, und zwar bei geöffnetem Gehäuse.

In dem Unterteil des quaderförmigen Gehäuses 1 befindet sich an einem Ende ein E-förmiges Blechpaket 2. Die seitlich aussen gelegenen Schenkel sind mit 3 und der mittig angeordnete Schenkel mit dem grösseren Querschnitt ist mit 4 bezeichnet.
Der Schenkel 4 wird von einer Stromspule 5 umschlossen, deren elektrische Anschlüsse 6 zum
Stromkabel 7 führen. Das Stromkabel 7 wird in üblicher Weise mit Wechselstrom ( 5o Hz ) gespeist.

In Richtung der Schenkel 3, 4 erstrecken sich
Hebel 8. Die dem Blechpaket 2 abgekehrten Enden 9
der Hebel 8 sind in Gummilagerstellen 1o einer am Gehäuse 1 angebrachten Halterung 11 befestigt und so
in Richtung 12 schwingend gelagert. Die dem Blechpaket 2 zugekehrten Enden der Hebel 8 sind abgewinkelt. Sie tragen Permanentmagnete 13, die nahe bis
an die Schenkel 3, 4 reichen. Jeder Hebel 8 bzw. Magnet 13 ist dabei einem Schenkel 3 und dem Schenkel 4
zugeordnet.

Wichtig ist, dass die beiden Magnete 13 von gleicher
Polung z.B. Nordpole sind. Dadurch ergibt sich bei der
in der Zeichnung aufgezeigten Polung der Schenkel 3, 4
( diese Polung ändert sich jedoch im Sinne des
Wechselstromes ) eine gegenläufige Bewegung der beiden
Hebel 8. Die beiden Hebel 8 nähern sich also, bevor
sie sich wieder auseinanderbewegen.

Die Hebel 8 sind mit einer Verschraubung 14 von zwei
Membranen 15 der beiden Luftpumpen 16 verbunden.
Die Schwingbewegung im Sinne des Pfeiles 12 führt dann
zu einer Betätigung der beiden Pumpen 16, denen ein
gemeinsamer Druckstutzen 17 zugeordnet ist.

Es versteht sich, dass durch die gegenläufige Bewegung
der Hebel 8 und die damit verbundenen gegenläufige Bewegung der beiden Luftpumpen 16 die Vibrationen wesentlich vermindert werden. Wird dazu noch das Gehäuse 1 in einem praktisch geschlossenen weiteren Gehäuse angeordnet – dies ist durch einen Linienzug angedeutet –, so wird eine sehr gute Geräusch- und Schwingungsdämpfung erreicht.

Für die Pumpleistung ist die Gegenläufigkeit der beiden Antriebshebel ( Hebel 8 ) nicht nachteilig, zumal bei einer gegenseitigen Näherung der beiden Magnete 13 die magnetischen Kräfte infolge des breiteren Schenkels 4 grösser ist.

Patentansprüche

1. Zwillingsmembranverdichter insb. zur Belüftung od. dgl. von Aquarien mit Permanentmagnete aufweisenden, elektromagnetisch angetriebenen, im wesentlichen einander parallelen, schwingend angeordneten Hebeln zur Membranbetätigung, dadurch gekennzeichnet, dass den beiden Pumpen (15) Hebel (8) zugeordnet sind, die durch Polung ihres elektrischen Antriebs gegenläufig gelagert sind.

2. Verdichter nach Anspruch 1, dadurch gekennzeichnet, dass bei einem wechselstromerregten Blechpaket von etwa E-förmiger Gestalt die je vor zwei Schenkeln (3,4) hin- und herbewegbaren Hebelenden Permanentmagnete (13) gleicher Polung aufweisen.

3. Verdichter nach Anspruch 1, dadurch gekennzeichnet, dass das im wesentlichen geschlossene Pumpengehäuse (1) in einem ebenfalls im wesentlichen geschlossenen Gehäuse angeordnet ist, wobei die Gehäusewandungen der beiden Gehäuse nahe beieinander und im wesentlichen parallel zueinander angeordnet sind.

4. Verdichter nach Anspruch 1 und 2, dadurch gekennzeichnet, dass die Hebel (8) in Gummilagern (1o) schwingend angeordnet sind.

5. Verdichter nach Anspruch 1 und 2, dadurch gekennzeichnet, dass die Permanentmagnete (13) bei einer gegenseitigen Näherung vor einen Schenkel (4) mit einem im Vergleich zu den anderen Schenkeln (3) grösserem Querschnitt gelangen.

## EUROPÄISCHER RECHERCHENBERICHT

**Europäisches Patentamt**

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>DE - B - 1 111 276</u> (CHAUSSON) <br><br> * Spalte 3, Zeilen 1-17; Spalte 4, Zeilen 13-35; Figuren 1 und 6-8 * <br><br> -- | 1,2 |
| | <u>GB - A - 654 947</u> (REUTTER) <br><br> * Seite 2, Zeilen 37-67; Figur 3; Seite 2, Zeilen 108-118 * <br><br> -- | 1,2 |
| | <u>DE - A - 2 753 449</u> (MICROPUMP) <br><br> * Seite 3, Zeilen 4-20; Figur 2 * <br><br> -- | 2,4,5 |
| | <u>US - A - 2 961 149</u> (HULL) <br><br> * Spalte 2, Zeilen 59-69 * <br><br> -- | 3 |
| | <u>AU - B - 45 067/68</u> (MUGRIDE) <br><br> * Seite 4, Zeilen 9-11 * <br><br> -- | 4 |
| A | <u>GB - A - 1 539 869</u> (CHANE) <br><br> ---- | |

**KLASSIFIKATION DER ANMELDUNG (Int. Cl.³)**

H 02 K 33/06
F 04 B 45/04

**RECHERCHIERTE SACHGEBIETE (Int. Cl.³)**

H 02 K 33/06
F 04 B 45/02
45/04
45/06
43/04
43/08

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort <br> Den Haag | Abschlußdatum der Recherche <br> 18-09-1980 | Prüfer <br> RANDES |
|---|---|---|

EPA form 1503.1   06.78